# EUROPÄISCHE PATENTSCHRIFT

(11) **EP 3 231 689 B1**
(45) Veröffentlichungstag und Bekanntmachung des Hinweises auf die Patenterteilung: **24.03.2021**
(21) Anmeldenummer: 17000599.5
(22) Anmeldetag: 07.04.2017
(51) Int. Cl.: B60L 53/16, B60L 53/34, B60L 53/36, B60L 53/37, B60L 53/38, B60L 53/126, B60L 5/42, B60L 5/36

(54) **VORRICHTUNG UND VERFAHREN ZUM AUFLADEN EINES ELEKTRISCH ANGETRIEBENEN FAHRZEUGS**
DEVICE AND METHOD FOR CHARGING AN ELECTRICALLY DRIVEN VEHICLE
DISPOSITIF ET PROCÉDÉ DESTINÉS À CHARGER UN VÉHICULE ÉLECTRIQUE

(30) Priorität: 14.04.2016 DE 102016004582
(43) Veröffentlichungstag der Anmeldung: 18.10.2017
(73) Patentinhaber: MAN Truck & Bus SE, 80995 München (DE)
(72) Erfinder: Schönherr, Stephan, 86153 Augsburg (DE)
(74) Vertreter: Liebl, Thomas

(56) Entgegenhaltungen:
- EP-A1- 2 712 762
- EP-A1- 2 981 432
- EP-A2- 2 623 360
- EP-A2- 2 960 140
- WO-A1-2016/050410
- DE-A1-102013 217 623
- DE-A1-102014 201 821
- DE-A1-102014 210 759
- DE-A1-102014 214 671
- DE-A1-102014 217 056
- DE-A1-102014 217 494
- DE-A1-102015 013 204
- US-A1- 2014 111 155
- US-A1- 2015 343 912
- US-A1- 2016 023 564
- US-B1- 8 823 551

## Beschreibung

Die Erfindung betrifft eine Vorrichtung zum Aufladen eines elektrisch angetriebenen Busses, ein Verfahren zum Aufladen eines elektrisch angetriebenen Busses sowie einen elektrisch angetriebenen Bus.

Es ist bekannt, einen Bus mit einem elektrischen Antrieb zu versehen. Ein derartiger Bus, insbesondere ein sogenannter Batteriebus, weist üblicherweise eine Energie-Speichereinrichtung, beispielsweise eine Traktionsbatterie, auf, mittels der elektrische Energie zum Antreiben des Busses gespeichert werden kann. Diese Energie-Speichereinrichtung kann an ortsfesten, speziell zum Aufladen des Busses vorgesehenen Ladestationen bzw. Ladesäulen mit elektrischer Energie aufgeladen werden.

Die Ladestationen sind dabei derart ausgebildet, dass an diesen nur Busse mit einer definiert angeordneten Ladevorrichtung zum Aufladen des Busses aufgeladen werden kann. Beispielsweise kann ein Bus mit einem Pantografen als Ladekontakt zum Aufladen des Busses nur dann an einer Ladestation aufgeladen werden, wenn der Pantograf derart an dem Bus angeordnet ist, dass er in einer festgelegten bzw. vorbestimmten Halteposition bzw. Ladeposition des Busses in Anlage mit einem korrespondierenden ladestationsseitigen Ladekontakt gebracht werden kann. Die vorbestimmte Halteposition für den Bus kann einem Fahrer des Busses dabei beispielsweise durch ein Schild oder durch eine Fahrbahnmarkierung angezeigt werden. Eine derartige Ladestation hat jedoch den Nachteil, dass an dieser nur Busse mit einem definiert angeordneten Pantografen aufgeladen werden können.

Die WO 2016/050410 A1 zeigt ein Verfahren zur Unterstützung der Positionierung eines Busses mit einer Energie-Speichereinrichtung relativ zu einer ortsfesten Ladestation. Zur exakten Positionierung des Busses sind beispielsweise Markierungen auf der Fahrbahn im Bereich der Ladestation vorgesehen. Mit Hilfe dieser Markierungen kann ein Fahrer den Bus in einem definierten Abstand parallel zur Ladestation positionieren. Ferner sind eine Fotozelle an der ortsfesten Ladestation und ein Retroreflektor am Bus vorgesehen. Sobald sich der Retroreflektor auf Höhe der Fotozelle befindet, wird der von der Fotozelle emittierte Lichtstrahl von dem Retroreflektor reflektiert und ein Fahrer erkennt, dass der Bus in seiner Längsrichtung ausgerichtet ist und die Ladeposition erreicht ist. Dann wird ein ladestationsseitiges Kupplungselement in Richtung einer am Bus angeordneten Kupplungseinrichtung bewegt.

Aus der EP 2 712 762 A1 ist ein Positioniersystem für ein Fahrzeug zum induktiven Laden auf einer ortsfesten Ladestation bekannt. Dabei wird mit Hilfe einer Kamera die Position eines Fahrzeugs bezüglich der ortsfesten Ladestation bestimmt, indem bei der Ermittlung des Fahrzeugs zur ortsfesten Ladestation markante Punkte am Fahrzeug, wie Scheinwerfer, Außenspiegel oder das Nummernschild, detektiert werden. Nach Berechnungen ist unter Verwendung des Abstands zwischen den markanten Punkten die Position dieser Punkte im Weltkoordinatensystem bekannt, wodurch die Distanz des Fahrzeugs zur Kamera bestimmt werden kann. Beim Positioniervorgang werden diese erhaltenen Punkte im Weltkoordinatensystem mit Referenzweltpunkten abgeglichen, wobei die Referenzweltpunkte in einem einmaligen Kalibriervorgang, bei dem das Fahrzeug in optimaler Position eingeparkt wurde, berechnet wurden.

Die EP 2 981 432 beschreibt eine Vorrichtung zum Aufladen eines elektrisch angetriebenen Busses. Die Aufladung des Busses erfolgt dabei, ohne dass dieser exakt in einer Ladestellung bezüglich der ortsfesten Ladestation positioniert werden muss. Dazu ist der ladestationsseitige Kontakt über eine große Länge ausgebildet, so dass selbst bei nicht genauer Positionierung des Busses im Bereich der ortsfesten Ladestation ein Aufladen möglich ist.

Aus der DE 10 2014 214 671 A1 ist eine Vorrichtung zum Aufladen eines elektrisch angetriebenen Busses bekannt, wobei der Bus mittels eines am Dach des Busses befestigten Stromabnehmers in einer ortsfesten Ladestation geladen wird. Zur Positionierung des Busses in der ortsfesten Ladestation ist eine erste Antenne an der Ladestation und eine zweite Antenne am Dach des Busses angeordnet, wobei zwischen den Antennen ein Funksignal ausgetauscht wird. Übersteigt die Signalstärke des Funksignals einen Schwellwert, ist der Bus hinreichend nah an der ortsfesten Ladestation positioniert.

Aufgabe der Erfindung ist es, eine Vorrichtung und ein Verfahren zum Aufladen eines elektrisch angetriebenen Busses bereitzustellen, mittels denen die Flexibilität der Ladestation erhöht wird.

Diese Aufgabe wird gelöst durch die Merkmale der unabhängigen Patentansprüche. Bevorzugte Weiterbildungen sind in den Unteransprüchen offenbart.

Gemäß Patentanspruch 1 wird eine Vorrichtung zum Aufladen eines elektrisch angetriebenen Busses, vorgeschlagen, mit einer ortsfesten Ladestation mit einem Ladebereich, der zum Aufladen des Busses in einem definierten Nahbereich im Bereich eines korrespondierenden fahrzeugseitigen Ladebereichs angeordnet werden kann. Erfindungsgemäß weist die Ladestation eine Positions-Ermittlungseinrichtung auf, mittels der die aktuelle Position des wenigstens einen Ladebereichs des sich in der Umgebung der Ladestation befindlichen Busses relativ zu der Ladestation, insbesondere relativ zu dem korrespondierenden ladestationsseitigen Ladebereich, ermittelt werden kann. Zudem ist wenigstens eine signaltechnisch mit der Positions-Ermittlungseinrichtung verbundene Ausgabeeinrichtung vorgesehen, mittels der an einem Fahrer in Abhängigkeit von der ermittelten Position des fahrzeugseitigen Ladebereichs Anweisungen und/oder Informationen zum Fahren des Busses in eine Ladeposition ausgegeben werden können, wobei in dieser Ladeposition der wenigstens eine ladestationsseitige Ladebereich in dem definierten Nahbereich im Bereich des fahrzeugseitigen Ladebereichs angeordnet ist oder anordenbar ist.

Auf diese Weise wird die Flexibilität der Ladestation erhöht, da nun zunächst die Position des wenigstens einen fahrzeugseitigen Ladebereichs relativ zu der Ladestation ermittelt wird. In Abhängigkeit von dieser ermittelten Position wird dann die Ladeposition, in der das Fahrzeug aufgeladen werden kann, ermittelt und der Fahrer bzw. das Fahrzeug hin zu dieser Ladeposition geführt. Somit kann ein Fahrzeug unabhängig von der Positionierung des fahrzeugseitigen Ladebereichs an dem Fahrzeug und auch unabhängig vom Fahrzeugtyp an einer einzigen Ladestation aufgeladen werden. Zudem werden auch die Möglichkeiten zur Anordnung des fahrzeugseitigen Ladebereichs an dem Fahrzeug erhöht, so dass der fahrzeugseitige Ladebereich dort an dem Fahrzeug angeordnet werden kann, wo es für das jeweilige Fahrzeugkonzept besonders vorteilhaft ist. Des Weiteren ist es für ein Betreiberunternehmen auch möglich, einen gemischten Fuhrpark an der gleichen Ladesäule zu betreiben bzw. zu laden.

Erfindungsgemäß ist die Positions-Ermittlungseinrichtung dabei durch eine als Kamera ausgebildete Bild-Erfassungseinrichtung gebildet. Vorzugsweise erfolgt die Ermittlung der Position des wenigstens einen fahrzeugseitigen Ladekontakts dabei ähnlich zu einem "Birdview"-System, wie es beispielsweise aus der EP 2 902 261 A1 bekannt ist. Zusätzlich kann dem Fahrzeug, insbesondere dem fahrzeugseitigen Ladebereich, auch eine Sendeeinrichtung zugeordnet sein, mittels der zur Ermittlung der Position des fahrzeugseitigen Ladebereichs ein Positionssignal an die Ladestation ausgegeben wird. Erfindungsgemäß ist wenigstens eine Ausgabeeinrichtung vorgesehen, die signaltechnisch mit der Positions-Ermittlungseinrichtung verbunden ist. Zusätzlich können das Fahrzeug und die Ladestation auch datenübertragend und/oder signalübertragend miteinander verbunden werden, um das Fahrzeug in die Ladeposition führen zu können. Bevorzugt stimmen sich das Fahrzeug und die Ladestation hierzu interaktiv miteinander ab.

In einer bevorzugten Ausgestaltung der erfindungsgemäßen Vorrichtung ist die wenigstens eine Ausgabeeinrichtung der Ladestation zugeordnet, um die Flexibilität der Ladestation weiter zu erhöhen. So können die Anweisungen bzw. die Informationen unabhängig von dem aufzuladenden Fahrzeug an den Fahrer des Fahrzeugs ausgegeben werden. Bevorzugt ist dabei vorgesehen, dass die ladestationsseitige Ausgabeeinrichtung durch einen Bildschirm gebildet ist, mittels dem dem Fahrer optische Anweisungen und/oder Informationen angezeigt werden können. Mittels des ladestationsseitigen Bildschirms kann dabei beispielsweise ähnlich zu einer Ampel bzw. zu einer Lichtsignalanlage ein rotes Signal zum Anhalten des Fahrzeugs, ein gelbes Signal zum baldigen Anhalten des Fahrzeugs und ein grünes Signal zum Vorwärtsbewegen des Fahrzeugs angezeigt werden. Ebenso können mittels des Bildschirms Pfeile mit der Bedeutung "Vor", "Halt" und "Zurück" oder Begriffe wie "Weiter", "Halt" bzw. "Stopp" und "Zurück" angezeigt werden. Alternativ oder zusätzlich zu dem Bildschirm können mittels der ladestationsseitigen Ausgabeeinrichtung aber auch akustische Anweisungen und/oder Informationen ausgegeben werden.

Vorzugsweise ist der Bildschirm derart an der Ladestation angeordnet, dass der Fahrer die Anzeige des Bildschirms erkennt bzw. erfasst, wenn er auf einem Fahrerplatz des Fahrzeugs sitzt. Dadurch kann das Fahrzeug auf besonders komfortable Weise in die Ladeposition gebracht und aufgeladen werden.

Alternativ und/oder zusätzlich zu der ladestationsseitigen Ausgabeeinrichtung kann die wenigstens eine Ausgabeeinrichtung auch dem Fahrzeug zugeordnet sein, um die Ladestation besonders einfach und kostengünstig zu gestalten. Bevorzugt ist dabei vorgesehen, dass mittels der wenigstens einen fahrzeugseitigen Ausgabeeinrichtung optische und/oder akustische Anweisungen bzw. Informationen an den Fahrer ausgegeben werden können. Die optischen Anweisungen und/oder Informationen können dabei beispielsweise ähnlich zu den bereits als Beispiel genannten Anweisungen der ladestationsseitigen Ausgabeeinrichtung ausgebildet sein. Die akustischen Anweisungen bzw. Informationen können beispielsweise ähnlich zu einem Parkassistenten zur akustischen Orientierung, insbesondere mit den Anweisungen "noch weiter vorwärts fahren", "Stopp" bzw. "Halt" und "Zurück", ausgebildet sein.

Bevorzugt ist die fahrzeugseitige Ausgabeeinrichtung durch einen Bildschirm gebildet, mittels dem dem Fahrer optische Anweisungen und/oder Informationen angezeigt werden können.

Weiter alternativ oder zusätzlich zu der ladestationsseitigen Ausgabeeinrichtung kann die Ausgabeeinrichtung auch einer zusätzlichen, speziell zur Ausgabe der Anweisungen bzw. Informationen an den Fahrer vorgesehenen, ortsfesten Ausgabestation zugeordnet sein. Eine derartige Ausgabestation ist beispielsweise dann besonders vorteilhaft, wenn der fahrzeugseitige Ladebereich und der Fahrerplatz bzw. der Fahrerarbeitsplatz des Fahrzeugs weit voneinander entfernt angeordnet sind. Bevorzugt ist dabei vorgesehen, dass die Ladestation und die Ausgabestation, insbesondere mit einem definierten Abstand, voneinander beabstandet angeordnet sind.

Vorzugsweise wird dem Fahrer mittels der optischen Ausgabeeinrichtung, insbesondere in einer Ansicht von oben, die aktuelle Position des Fahrzeugs relativ zu der Ladeposition als Information angezeigt. Mittels einer derartigen Anzeige kann der Fahrer das Fahrzeug auf einfache und effektive Weise in die Ladeposition bringen.

Besonders bevorzugt wird mittels der optischen Ausgabeeinrichtung in einer Ansicht von oben, insbesondere in vereinfachter Darstellung, das Fahrzeug in seiner aktuellen Position und eine Ladepositionsfläche, die das Fahrzeug in der Ladeposition einnimmt, angezeigt. So kann der Fahrer das Fahrzeug auf besonders komfortable und zuverlässige Weise in die Ladeposition bringen. Vorzugsweise erfolgt die Anzeige dabei ebenfalls ähnlich zu einem "Birdview" -System.

Erfindungsgemäß ist der ladestationsseitige Ladebereich durch wenigstens einen Ladekontakt gebildet, der zum Aufladen des Fahrzeugs in Anlage mit wenigstens einem korrespondierenden fahrzeugseitigen Ladekontakt als fahrzeugseitigen Ladebereich bringbar ist. So kann das Fahrzeug einfach und zuverlässig aufgeladen werden. Erfindungsgemäß ist dabei vorgesehen, dass der wenigstens eine fahrzeugseitige Ladekontakt durch einen Pantograf gebildet, um den fahrzeugseitigen Ladekontakt funktionssicher und flexibel zu gestalten.

Vorzugsweise ist die Ausgabeeinrichtung signaltechnisch mit einer Fahrzeuginformations-Ermittlungseinrichtung verbunden, mittels der die Breite des Fahrzeugs und/oder die Höhe des Fahrzeugs und/oder die Länge des Fahrzeugs und/oder der Fahrzeugtyp und/oder die Position des fahrzeugseitigen Ladebereichs auf dem Fahrzeug ermittelt werden kann. Mittels einer derartigen Fahrzeuginformations-Ermittlungseinrichtung kann die Ladeposition, in der das Fahrzeug aufgeladen werden kann, mit hoher Genauigkeit ermittelt und entsprechende Anweisungen bzw. Informationen an den Fahrer des Fahrzeugs ausgegeben werden.

Zur Lösung der bereits genannten Aufgabe wird ferner ein Verfahren zum Aufladen eines elektrisch angetriebenen Busses beansprucht, mit einer ortsfesten Ladestation mit einem Ladebereich, der zum Aufladen des Busses in einem definierten Nahbereich im Bereich eines korrespondierenden fahrzeugseitigen Ladebereichs angeordnet wird. Erfindungsgemäß weist die Ladestation eine Positions-Ermittlungseinrichtung auf, mittels der die aktuelle Position des Ladebereichs des sich in der Umgebung der Ladestation befindlichen Busses relativ zu der Ladestation ermittelt wird, insbesondere relativ zu dem korrespondierenden ladestationsseitigen Ladebereich ermittelt wird. Zudem ist wenigstens eine signaltechnisch mit der Positions-Ermittlungseinrichtung verbundene Ausgabeeinrichtung vorgesehen, mittels der an einen Fahrer des Fahrzeugs in Abhängigkeit von der ermittelten Position des fahrzeugseitigen Ladebereichs Anweisungen und/oder Informationen zum Fahren des Fahrzeugs in eine Ladeposition ausgegeben werden, in der der ladestationsseitige Ladebereich in dem definierten Nahbereich im Bereich des fahrzeugseitigen Ladebereichs angeordnet ist oder anordenbar ist.

Die sich durch die erfindungsgemäße Verfahrensführung ergebenden Vorteile sind identisch mit den bereits gewürdigten Vorteilen der erfindungsgemäßen Vorrichtung und werden an dieser Stelle nicht wiederholt.

Zudem wird auch eine Ladestation zum Aufladen eines elektrisch angetriebenen Fahrzeugs, insbesondere eines elektrisch angetriebenen Busses, beansprucht, mit einem Ladebereich, der zum Aufladen des Fahrzeugs in einem definierten Nahbereich im Bereich eines korrespondierenden fahrzeugseitigen Ladekontakt anordenbar ist. Erfindungsgemäß weist die Ladestation eine Positions-Ermittlungseinrichtung auf, mittels der die aktuelle Position des Ladebereichs des sich in der Umgebung der Ladestation befindlichen Fahrzeugs relativ zu der Ladestation, insbesondere relativ zu dem korrespondierenden ladestationsseitigen Ladebereich ermittelbar ist. Bevorzugt ist dabei vorgesehen, dass die Positions-Ermittlungseinrichtung signaltechnisch mit einer Ausgabeeinrichtung verbunden ist, mittels der an einen Fahrer des sich in der Umgebung der Ladestation befindlichen Fahrzeugs in Abhängigkeit von der ermittelten Position des fahrzeugseitigen Ladebereichs Anweisungen und/oder Informationen zum Fahren des Fahrzeugs in eine Ladeposition ausgebbar sind, in der der ladestationsseitige Ladebereich in dem definierten Nahbereich im Bereich des wenigstens einen fahrzeugseitigen Ladekontakt angeordnet ist oder anordenbar ist.

Des Weiteren wird auch ein elektrisch angetriebener Bus, mit der erfindungsgemäßen Vorrichtung und/oder zur Durchführung des erfindungsgemäßen Verfahrens beansprucht.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Perspektivdarstellung die erfindungsgemäße Vorrichtung mit einem in einer Ladeposition angeordneten Bus;
- Fig. 2: in einer schematischen Darstellung eine zweite Ausführungsform der Vorrichtung; und
- Fig. 3: in einer Darstellung gemäß Fig. 1 eine dritte Ausführungsform der Vorrichtung.

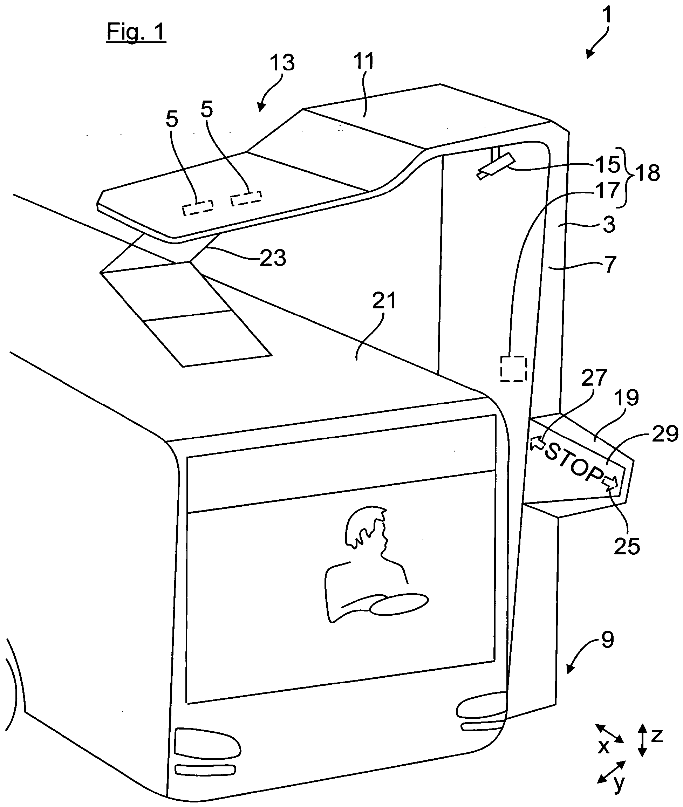

In Fig. 1 ist eine erfindungsgemäße Vorrichtung 1 gezeigt. Die Vorrichtung 1 weist eine ortsfeste Ladestation bzw. Ladesäule 3 mit in Fig. 1 mit gestrichelten Linien angedeuteten elektrischen Ladekontakten 5 auf. Die Ladestation 3 ist hier beispielhaft im Wesentlichen L-förmig ausgebildet. Ein L-Schenkel 7 der Ladestation 3 ist hier dabei im Wesentlichen vertikal bzw. in Hochachsenrichtung z ausgerichtet und mit einem freien Endbereich 9 bodenseitig festgelegt. Ein L-Schenkel 11 der Ladestation 3 ist hier im Wesentlichen horizontal bzw. Querachsenrichtung y ausgerichtet und weist an einem freien Endbereich 13 die Ladekontakte 5 auf.

Wie in Fig. 1 weiter gezeigt ist, weist die Ladestation 3 hier auch eine als Kamera 15 ausgebildete Bild-Erfassungseinrichtung auf, mittels der die Umgebung der Ladestation 3 bildlich bzw. filmisch erfasst wird. Aus den Aufnahmen der Kamera 15 ermittelt eine signaltechnisch mit der Kamera 15 verbundene, in Fig. 1 mit gestrichelten Linien angedeutete Auswerteeinheit 17 der Ladestation 3, ob sich ein Fahrzeug mit einem Pantograf als fahrzeugseitigen Ladekontakt in der Umgebung der Ladestation 3 befindet. Befindet sich ein derartiges Fahrzeug in der Umgebung der Ladestation 3 wird mittels der Auswerteeinheit 17 die aktuelle Position des Pantografen relativ zu den ladestationsseitigen Ladekontakten 5 ermittelt. Die Kamera 15 und die Auswerteeinheit 17 bilden hier somit eine Positions-Ermittlungseinrichtung 18 zur Ermittlung der aktuellen Position eines fahrzeugseitigen Ladekontakts relativ zu den ladestationsseitigen Ladekontakten 5 aus. Zusätzlich zu der hier beispielshaft gezeigten Kamera 15 können noch weitere Bild-Erfassungseinrichtungen vorgesehen sein.

Wie aus Fig. 1 weiter hervorgeht, weist die Ladestation 3 hier beispielhaft auch eine als Bildschirm 19 ausgebildete, signaltechnisch mit der Auswerteeinheit 17 verbundene Ausgabeeinrichtung auf. Mittels des Bildschirms 19 werden an einen Fahrer eines sich in der Umgebung der Ladestation 3 befindlichen Fahrzeugs in Abhängigkeit von der ermittelten Position des fahrzeugseitigen Pantografs Anweisungen zum Fahren des Fahrzeugs in eine definierte Ladeposition ausgegeben. In dieser Ladeposition können die ladestationsseitigen Ladekontakte 5 in Anlage mit den fahrzeugseitigen Ladekontakten bzw. mit dem fahrzeugseitigen Pantograf gebracht und das Fahrzeug geladen werden. Zur Ermittlung der Ladeposition des Busses werden hier mittels der Kamera 15 und der Auswerteinheit 17 auch die Breite, die Länge und die Position des Pantografen 23 auf dem Fahrzeug ermittelt.

In Fig. 1 ist hier ein als Bus 21 ausgebildetes Fahrzeug mit einem Pantographen 23 gezeigt, der sich bereits in der definierten Ladeposition befindet. Mittels des Bildschirms 19 wird dem Fahrer des Busses 21 dann "Stop" angezeigt, so dass der Fahrer weiß, dass er mit dem Bus 21 in der aktuellen Position bleiben muss, um den Bus 21 aufzuladen. Sofern sich der Bus 21, in Längsrichtung x gesehen, noch hinter der definierten Ladeposition befindet, wird dem Fahrer mittels des Bildschirms 19 ein in Fig. 1 mit gestrichelten Linien angedeuteter Pfeil 25 nach vorne angezeigt. Sofern sich der Bus 21 vor der definierten Ladeposition befindet, wird mittels des Bildschirms 19 ein in Fig. 1 mit gestrichelten Linien angedeuteter Pfeil 27 nach hinten angezeigt.

Des Weiteren ist der Bildschirm 19 hier derart an der Ladestation 3 angeordnet, dass der Fahrer des Busses 21 die Anzeige des Bildschirms 19 erkennt, wenn er auf einem Fahrerplatz des Busses 21 sitzt, wie es in Fig. 1 gezeigt ist. Konkret ragt der Bildschirm 19 hier in Längsrichtung x nach vorne von dem L-Schenkel 7 der Ladestation 3 ab. Zudem ist der Bildschirm 19 hier, in Hochrichtung z gesehen, im Wesentlichen mittig an dem L-Schenkel 7 der Ladestation 3 angeordnet. Eine Anzeigefläche 29 des Bildschirms 9 verläuft hier im Wesentlichen in Hochrichtung z sowie in Längsrichtung x.

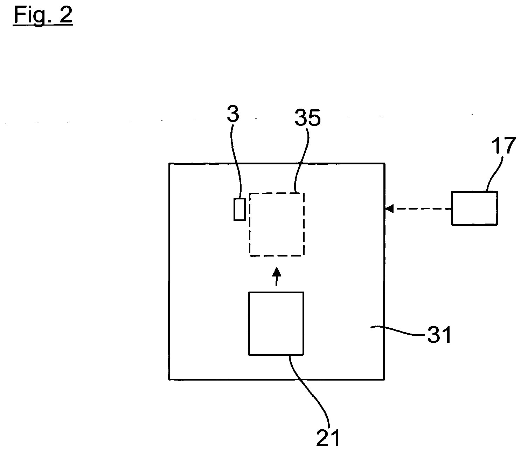

In Fig. 2 ist eine zweite Ausführungsform einer Ausgabeeinrichtung zur Ausgabe von Anweisungen bzw. Informationen an den Fahrer des Busses 21 gezeigt. Die Ausgabeeinrichtung ist hier durch einen fahrzeugseitigen Bildschirm 31 gebildet, mittels dem dem Fahrer des Busses 21 die aktuelle Position des Busses 21 relativ zu der ermittelten Ladeposition als Information angezeigt werden kann. Der Bildschirm 31 ist signaltechnisch mit der ladestationsseitigen Auswerteinheit 17 verbunden. Mittels der Informationen zu der Breite, der Länge und der Position des Pantografen 23 auf dem Bus 21 können die Position und die Abmessungen einer in Fig. 2 mit gestrichelten Linien angedeuteten Ladepositionsfläche 35 ermittelt werden. Auf dieser Ladepositionsfläche 35 muss der Bus 21 abgestellt werden, um ihn mittels der Ladestation 3 aufladen zu können. Mittels des Bildschirms 31 werden hier dann in einer Ansicht von oben der Bus 21 in seiner aktuellen Position und die Ladepositionsfläche 35 angezeigt. Mittels einer derartigen Anzeige kann der Fahrer den Bus 21 auf einfache und effektive Weise in die Ladeposition bringen.

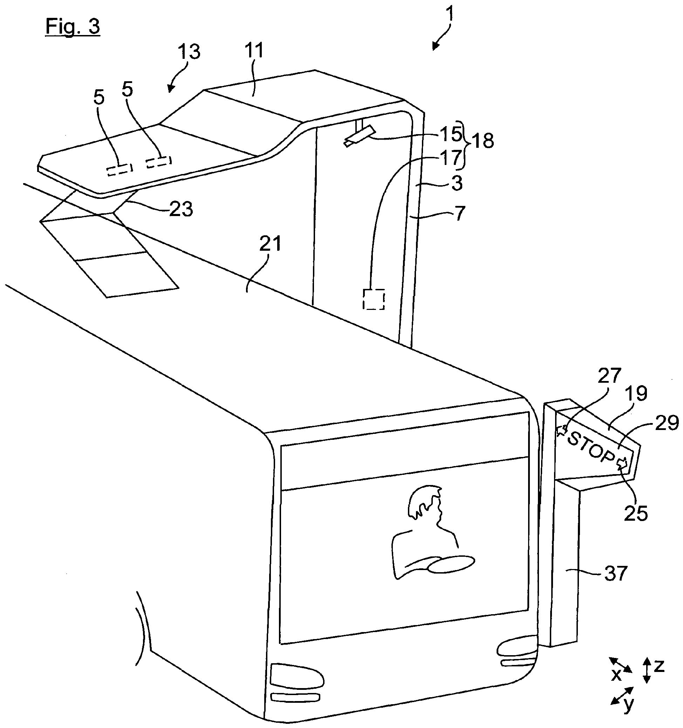

In Fig. 3 ist eine dritte Ausführungsform einer Ausgabeeinrichtung zur Ausgabe von Anweisungen bzw. Informationen an den Fahrer des Busses 21 gezeigt. Im Vergleich zu der in Fig. 1 gezeigten ersten Ausführungsform ist der Bildschirm 19 hier nicht der Ladestation 3, sondern einer separaten bzw. zusätzlich zu der Ladestation 3 vorgesehenen Ausgabestation bzw. Ausgabesäule 37 zugeordnet. Die Ladestation 3 und die Ausgabestation 37 sind hier in Längsrichtung x mit einem definierten Abstand voneinander beabstandet angeordnet. Zudem ist die Ausgabestation hier in Längsrichtung vor der Ladestation 3 angeordnet. Auf diese Weise können mittels der Vorrichtung 1 Busse 21 aufgeladen werden, deren Pantograf an einem hinteren Bereich des Busses 21 angeordnet ist.

### Bezugszeichenliste

- 1: Vorrichtung
- 3: Ladestation
- 5: Ladekontakt
- 7: L-Schenkel
- 9: freier Endbereich
- 11: L-Schenkel
- 13: freier Endbereich
- 15: Kamera
- 17: Auswerteeinheit
- 18: Positions-Ermittlungseinrichtung
- 19: Bildschirm
- 21: Bus
- 23: Pantograf
- 25: Pfeil
- 27: Pfeil
- 29: Anzeigefläche
- 31: Bildschirm
- 35: Ladepositionsfläche
- 37: Ausgabestation

## Patentansprüche

1. Vorrichtung zum Aufladen eines elektrisch angetriebenen Busses, mit einer ortsfesten Ladestation (3) mit einem Ladebereich (5), der zum Aufladen des Busses in einem definierten Nahbereich im Bereich eines korrespondierenden fahrzeugseitigen Ladebereichs (23) anordenbar ist,
wobei der ladestationsseitige Ladebereich durch wenigstens einen Ladekontakt (5) gebildet ist, der zum Aufladen des Busses in Anlage mit wenigstens einem korrespondierenden fahrzeugseitigen Ladekontakt (23) als fahrzeugseitigen Ladebereich bringbar ist, wobei der wenigstens eine fahrzeugseitige Ladekontakt (23) durch einen Pantografen gebildet ist,
wobei die ortsfeste Ladestation (3) eine Positions-Ermittlungseinrichtung (18) aufweist, mittels der die aktuelle Position des Pantografen des sich in der Umgebung der Ladestation (3) befindlichen Busses relativ zu der Ladestation (3), insbesondere relativ zu dem korrespondierenden ladestationsseitigen Ladebereich (5), ermittelbar ist,
wobei die Positions-Ermittlungseinrichtung (18) eine als Kamera (15) ausgebildete Bild-Erfassungseinrichtung und eine Auswerteeinheit (17) zur Ermittlung der aktuellen Position des Pantografen relativ zu den ladestationsseitigen Ladekontakten aufweist, wobei mittels der Bild-Erfassungseinrichtung (18) und der Auswerteeinheit (17) die Breite, die Länge und die Position des Pantografen zur Ermittlung der Ladeposition des Busses ermittelbar sind,
wobei wenigstens eine signaltechnisch mit der Positions-Ermittlungseinrichtung (18) verbundene Ausgabeeinrichtung (19, 31) vorgesehen ist, und
wobei mittels der Positions-Ermittlungseinrichtung (18) an einen Fahrer des Busses in Abhängigkeit von der ermittelten Position des Pantografen Anweisungen und/oder Informationen zum Fahren des Busses in die Ladeposition ausgebbar sind, in der der ladestationsseitige Ladebereich (5) in dem definierten Nahbereich im Bereich des korrespondierenden fahrzeugseitigen Ladebereichs (23) angeordnet ist oder anordenbar ist.

2. Vorrichtung nach Anspruch 1, **dadurch gekennzeichnet, dass** die wenigstens eine Ausgabeeinrichtung (19) der Ladestation zugeordnet ist, wobei bevorzugt vorgesehen ist, dass die ladestationsseitige Ausgabeeinrichtung (19) durch einen Bildschirm gebildet ist, mittels dem dem Fahrer optische Anweisungen und/oder Informationen anzeigbar sind.

3. Vorrichtung nach Anspruch 2, **dadurch gekennzeichnet, dass** der Bildschirm (19) derart an der Ladestation (3) angeordnet ist, dass der Fahrer die Anzeige des Bildschirms (19) erkennt, wenn er auf einem Fahrerplatz des Fahrzeugs (21) sitzt.

4. Vorrichtung nach einem der vorhergehenden Ansprüche, **dadurch gekennzeichnet, dass** die wenigstens eine Ausgabeeinrichtung (31) dem Fahrzeug (21) zugeordnet ist, wobei bevorzugt vorgesehen ist, dass mittels der wenigstens einen fahrzeugseitigen Ausgabeeinrichtung (31) optische und/oder akustische Anweisungen bzw. Informationen an den Fahrer ausgebbar sind.

5. Vorrichtung nach Anspruch 4, **dadurch gekennzeichnet, dass** die fahrzeugseitige Ausgabeeinrichtung (31) durch einen Bildschirm gebildet ist, mittels dem dem Fahrer optische Anweisungen und/oder Informationen anzeigbar sind.

6. Vorrichtung nach einem der vorhergehenden Ansprüche, **dadurch gekennzeichnet, dass** die Ausgabeeinrichtung (19) einer zusätzlichen, speziell zur Ausgabe der Anweisungen und/oder Informationen an den Fahrer vorgesehenen, ortsfesten Ausgabestation (37) zugeordnet ist, wobei bevorzugt vorgesehen ist, dass die Ladestation (3) und die Ausgabestation (37), insbesondere mit einem definierten Abstand, voneinander beabstandet angeordnet sind.

7. Vorrichtung nach einem der vorhergehenden Ansprüche, **dadurch gekennzeichnet, dass** dem Fahrer mittels der optischen Ausgabeeinrichtung (31), insbesondere in einer Ansicht von oben, die aktuelle Position des Fahrzeugs (21) relativ zu der Ladeposition als Information anzeigbar ist.

8. Vorrichtung nach Anspruch 7, **dadurch gekennzeichnet, dass** mittels der optischen Ausgabeeinrichtung (31) in einer Ansicht von oben, insbesondere in vereinfachter Darstellung, das Fahrzeug (21) in seiner aktuellen Position und eine Ladepositionsfläche (35), die das Fahrzeug (21) in der Ladeposition einnimmt, anzeigbar sind.

9. Verfahren zum Aufladen eines elektrisch angetriebenen Busses, mit einer ortsfesten Ladestation (3) mit einem Ladebereich (5), der zum Aufladen des Busses in einem definierten Nahbereich im Bereich eines korrespondierenden fahrzeugseitigen Ladebereichs (23) angeordnet wird,
wobei der ladestationsseitige Ladebereich durch wenigstens einen Ladekontakt (5) gebildet ist, der zum Aufladen des Busses in Anlage mit wenigstens einem korrespondierenden fahrzeugseitigen Ladekontakt (23) als fahrzeugseitigen Ladebereich bringbar ist, wobei der wenigstens eine fahrzeugseitige Ladekontakt (23) durch einen Pantografen gebildet ist,
wobei die ortsfeste Ladestation eine Positions-Ermittlungseinrichtung (18) aufweist, mittels der die aktuelle Position des Pantografen des sich in der Umgebung der Ladestation (3) befindlichen Busses relativ zu der Ladestation (3) ermittelt wird, insbesondere relativ zu dem korrespondierenden ladestationsseitigen Ladebereich (5) ermittelt wird,
wobei die Positions-Ermittlungseinrichtung (18) eine als Kamera (15) ausgebildete Bild-Erfassungseinrichtung und eine Auswerteeinheit (17) zur Ermittlung der aktuellen Position des Pantografen relativ zu den ladestationsseitigen Ladekontakten aufweist, wobei mittels der Bild-Erfassungseinrichtung (18) und der Auswerteeinheit (17) die Breite, die Länge und die Position des Pantografen zur Ermittlung der Ladeposition des Busses ermittelbar sind,
wobei wenigstens eine signaltechnisch mit der Positions-Ermittlungseinrichtung (18) verbundene Ausgabeeinrichtung (19, 31) vorgesehen ist, und
wobei mittels der Positions-Ermittlungseinrichtung (18) an einen Fahrer des Busses in Abhängigkeit von der ermittelten Position des Pantografen Anweisungen und/oder Informationen zum Fahren des Busses in die Ladeposition ausgegeben werden, in der der ladestationsseitige Ladebereich (5) in dem definierten Nahbereich im Bereich des korrespondierenden fahrzeugseitigen Ladebereichs (23) angeordnet ist oder anordenbar ist.

10. Elektrisch angetriebener Bus für eine Vorrichtung nach einem der Ansprüche 1 bis 8 und/oder zur Durchführung eines Verfahrens nach Anspruch 9.

## Claims

1. Device for charging an electrically driven bus, having a positionally fixed charging station (3) with a charging area (5) which can be arranged in a defined proximity in the area of a corresponding vehicle-side charging area (23),
wherein the charging-station-side charging area is formed by at least one charging contact (5) which, for the charging of the bus, can be moved into abutment with at least one corresponding vehicle-side charging contact (23) as vehicle-side charging area, wherein the at least one vehicle-side charging contact (23) is formed by a pantograph,
wherein the positionally fixed charging station (3) has a position-determining apparatus (18) by means of which the current position of the pantograph of the bus located in the surroundings of the charging station (3) can be determined relative to the charging station (3), in particular relative to the corresponding charging-station-side charging area (5),
wherein the position-determining apparatus (18) has an image-capturing apparatus embodied as a camera (15), and an evaluation unit (17) for determining the current position of the pantograph relative to the charging-station-side charging contacts, wherein the width, the length and the position of the pantograph can be determined by means of the image-capturing apparatus (18) and the evaluation unit (17) in order to determine the charging position of the bus,
wherein at least one output apparatus (19, 31) which is connected in a signal-transmitting fashion to the position-determining apparatus (18) is provided, and
wherein instructions and/or information relating to the driving of the bus into the charging position can be output to a driver of the bus by means of the position-determining apparatus (18), as a function of the determined position of the pantograph, in which charging position the charging-station-side charging area (5) is or can be arranged in the defined proximity in the area of the corresponding vehicle-end charging area (23).

2. Device according to Claim 1, **characterized in that** the at least one output apparatus (19) is assigned to the charging station, wherein there is preferably provision that the charging-station-side output apparatus (19) is formed by a screen by means of which visual instructions and/or information can be displayed to the driver.

3. Device according to Claim 2, **characterized in that** the screen (19) is arranged on the charging station (3) in such a way that the driver detects the display of the screen (19) when he or she is seated in a driver's seat in the vehicle (21).

4. Device according to one of the preceding claims, **characterized in that** the at least one output apparatus (31) is assigned to the vehicle (21), wherein there is preferably provision that visual and/or acoustic instructions and/or information can be output to the driver by means of the at least one vehicle-end output apparatus (31).

5. Device according to Claim 4, **characterized in that** the vehicle-side output apparatus (31) is formed by a screen by means of which visual instructions and/or information can be displayed to the driver.

6. Device according to one of the preceding claims, **characterized in that** the output apparatus (19) is assigned to an additional positionally fixed output station (37) which is provided specifically for outputting the instructions and/or information to the driver, wherein there is preferably provision that the charging station (3) and the output station (37) are arranged spaced apart from one another, in particular at a defined distance.

7. Device according to one of the preceding claims, **characterized in that** the current position of the vehicle (21) relative to the charging position can be displayed as information to the driver by means of the visual output apparatus (31), in particular in a view from above.

8. Device according to Claim 7, **characterized in that** the vehicle (21) can be displayed in its current position, and a charging position area (35), which the vehicle (21) occupies in the charging position, can be displayed in a view from above, in particular in a simplified representation, by means of the visual output device (31).

9. Method for charging an electrically driven bus, having a positionally fixed charging station (3) with a charging area (5) which for charging the bus is arranged in a defined proximity in the area of a corresponding vehicle-side charging area (23),
wherein the charging-station-side charging area is formed by at least one charging contact (5) which, for the charging of the bus, can be moved into abutment with at least one corresponding vehicle-side charging contact (23) as vehicle-side charging area, wherein the at least one vehicle-side charging contact (23) is formed by a pantograph,
wherein the positionally fixed charging station has a position-determining apparatus (18) by means of which the current position of the pantograph of the bus located in the surroundings of the charging station (3) is determined relative to the charging station (3), in particular relative to the corresponding charging-station-side charging area (5),
wherein the position-determining apparatus (18) has an image-capturing apparatus embodied as a camera (15), and an evaluation unit (17) for determining the current position of the pantograph relative to the charging-station-side charging contacts, wherein the width, the length and the position of the pantograph can be determined by means of the image-capturing apparatus (18) and the evaluation unit (17) in order to determine the charging position of the bus,
wherein at least one output apparatus (19, 31) which is connected in a signal-transmitting fashion to the position-determining apparatus (18) is provided, and
wherein instructions and/or information relating to the driving of the bus into the charging position can be output to a driver of the bus by means of the position-determining apparatus (18), as a function of the determined position of the pantograph, in which charging position the charging-station-side charging area (5) is or can be arranged in the defined proximity in the area of the corresponding vehicle-side charging area (23).

10. Electrically driven bus for a device according to one of Claims 1 to 8, and/or for carrying out a method according to Claim 9.

## Revendications

1. Dispositif permettant de recharger un bus électrique, comprenant une station de charge fixe (3) dotée d'une zone de charge (5) qui peut être disposée dans une zone de proximité définie au niveau d'une zone de charge côté véhicule (23) correspondante pour recharger le bus,
dans lequel la zone de charge côté station de charge est formée par au moins un contact de charge (5) qui peut être amené en application contre au moins un contact de charge côté véhicule (23) correspondant, en tant que zone de charge côté véhicule, pour recharger le bus, ledit au moins un contact de charge côté véhicule (23) étant formé par un pantographe,
la station de charge fixe (3) présentant un dispositif de détermination de position (18) qui permet de déterminer la position actuelle du pantographe du bus se trouvant dans l'environnement de la station de charge (3) par rapport à la station de charge (3), en particulier par rapport à la zone de charge côté station de charge (5) correspondante,
le dispositif de détermination de position (18) présentant un dispositif d'acquisition d'image réalisé sous forme de caméra (15) et une unité d'évaluation (17) pour déterminer la position actuelle du pantographe par rapport aux contacts de charge côté station de charge, le dispositif d'acquisition d'image (18) et l'unité d'évaluation (17) permettant de déterminer la largeur, la longueur et la position du pantographe afin de déterminer la position de charge du bus,
dans lequel au moins un dispositif de sortie (19, 31), relié au dispositif de détermination de position (18) pour la transmission de signaux, est prévu, et
dans lequel le dispositif de détermination de position (18) permet de sortir pour un conducteur du bus, en fonction de la position déterminée du pantographe, des instructions et/ou des informations pour conduire le bus jusqu'à la position de charge dans laquelle la zone de charge côté station de charge (5) est ou peut être disposée dans la zone de proximité définie au niveau de la zone de charge côté véhicule (23) correspondante.

2. Dispositif selon la revendication 1, **caractérisé en ce que** ledit au moins un dispositif de sortie (19) est associé à la station de charge, dans lequel il est prévu de préférence que le dispositif de sortie côté station de charge (19) soit formé par un écran qui permet de montrer au conducteur des instructions et/ou des informations visuelles.

3. Dispositif selon la revendication 2, **caractérisé en ce que** l'écran (19) est disposé à la station de charge (3) de telle sorte que le conducteur perçoit l'affichage de l'écran (19) lorsqu'il occupe un siège de conducteur du véhicule (21).

4. Dispositif selon l'une quelconque des revendications précédentes, **caractérisé en ce que** ledit au moins un dispositif de sortie (31) est associé au véhicule (21), dans lequel il est prévu de préférence que ledit au moins un dispositif de sortie côté véhicule (31) permette de sortir des instructions ou des informations visuelles et/ou acoustiques pour le conducteur.

5. Dispositif selon la revendication 4, **caractérisé en ce que** le dispositif de sortie côté véhicule (31) est formé par un écran qui permet de montrer au conducteur des instructions et/ou des informations visuelles.

6. Dispositif selon l'une quelconque des revendications précédentes, **caractérisé en ce que** le dispositif de sortie (19) est associé à une station de sortie fixe (37) supplémentaire, prévue spécialement pour sortir les instructions et/ou les informations pour le conducteur, dans lequel il est prévu de préférence que la station de charge (3) et la station de sortie (37) soient espacées l'une de l'autre, en particulier d'une distance définie.

7. Dispositif selon l'une quelconque des revendications précédentes, **caractérisé en ce que** le dispositif de sortie visuelle (31) permet de montrer au conducteur sous forme d'information la position actuelle du véhicule (21) par rapport à la position de charge, en particulier dans une vue de dessus.

8. Dispositif selon la revendication 7, **caractérisé en ce que** le dispositif de sortie visuelle (31) permet d'afficher dans une vue de dessus, en particulier dans une représentation simplifiée, le véhicule (21) dans sa position actuelle et une surface de position de charge (35) occupée par le véhicule (21) dans la position de charge.

9. Procédé permettant de recharger un bus électrique, comprenant une station de charge fixe (3) dotée d'une zone de charge (5) qui peut être disposée dans une zone de proximité définie au niveau d'une zone de charge côté véhicule (23) correspondante pour recharger le bus,
dans lequel la zone de charge côté station de charge est formée par au moins un contact de charge (5) qui peut être amené en application contre au moins un contact de charge côté véhicule (23) correspondant, en tant que zone de charge côté véhicule, pour recharger le bus, ledit au moins un contact de charge côté véhicule (23) étant formé par un pantographe,
la station de charge fixe présentant un dispositif de détermination de position (18) qui permet de déterminer la position actuelle du pantographe du bus se trouvant dans l'environnement de la station de charge (3) par rapport à la station de charge (3), en particulier par rapport à la zone de charge côté station de charge (5) correspondante,
le dispositif de détermination de position (18) présentant un dispositif d'acquisition d'image réalisé sous forme de caméra (15) et une unité d'évaluation (17) pour déterminer la position actuelle du pantographe par rapport aux contacts de charge côté station de charge, le dispositif d'acquisition d'image (18) et l'unité d'évaluation (17) permettant de déterminer la largeur, la longueur et la position du pantographe afin de déterminer la position de charge du bus,
dans lequel au moins un dispositif de sortie (19, 31), relié au dispositif de détermination de position (18) pour la transmission de signaux, est prévu, et
dans lequel le dispositif de détermination de position (18) permet de sortir pour un conducteur du bus, en fonction de la position déterminée du pantographe, des instructions et/ou des informations pour conduire le bus jusqu'à la position de charge dans laquelle la zone de charge côté station de charge (5) est ou peut être disposée dans la zone de proximité définie au niveau de la zone de charge côté véhicule (23) correspondante.

10. Bus électrique pour un dispositif selon l'une quelconque des revendications 1 à 8 et/ou pour exécuter un procédé selon la revendication 9.
